# EUROPEAN PATENT APPLICATION

(11) **EP 3 647 639 A1**
(43) Date of publication of application: **06.05.2020**
(21) Application number: 19203795.0
(22) Date of filing: 17.10.2019
(51) Int. Cl.: F16K 31/06

(54) **PILOT TYPE SOLENOID VALVE**

(30) Priority: 01.11.2018 JP 2018206700
(71) Applicant: Nikki Co., Ltd., Kanagawa-ken 243-0801 (JP)
(72) Inventor: IWASAKI, Masashi, Atsugi, Kanagawa 243-0801 (JP); FUKUOKA, Tomoaki, Atsugi, Kanagawa 243-0801 (JP); MURAKAMI, Tsutomu, Atsugi, Kanagawa 243-0801 (JP)
(74) Representative: Boult Wade Tennant LLP

(57) **Abstract**

When a pilot type solenoid valve is fully open, by an electromagnetic force of an electromagnetic coil, a contact portion of a main valve is in contact with a contacted portion of a guide sleeve, and a pilot valve is sucked and held in a state where a base end of the pilot valve is not in contact with a fixed core.

## Description

### BACKGROUND

### Technical Field

The present invention relates to a pilot type solenoid valve that drives a movable core by a biasing force of a spring and a suction force of an electromagnetic coil opposing thereto, and brings a valve body connected to the movable core in contact with a valve seat or separates the valve body from the valve seat, particularly to a pilot type solenoid valve that first opens a pilot valve when the valve body is separated from the valve seat, and opens a main valve when an electromagnetic force of the electromagnetic coil exceeds a pressure difference between an input port and an output port formed in a fuel transport path.

### Related Art

Conventionally, for example, a gas fuel engine using a high pressure gas fuel such as a liquefied petroleum gas (LPG) or a compressed natural gas (CNG) uses a normally closed solenoid valve that drives a movable core by a biasing force of a spring and a suction force of an electromagnetic coil opposing thereto when a fuel is delivered from a storage tank to the engine under high pressure, and brings a valve body connected to the movable core in contact with a valve seat or separates the valve body from the valve seat.

By the way, the solenoid valve used for a high pressure gas fuel needs to stop a high pressure fluid at the time of stop (fully closed) and to open the valve by overcoming a force of the high pressure gas at the time of operation. For example, as presented in JP 10-160024 A or JP 2001-41340 A, a pilot type solenoid valve is adopted.

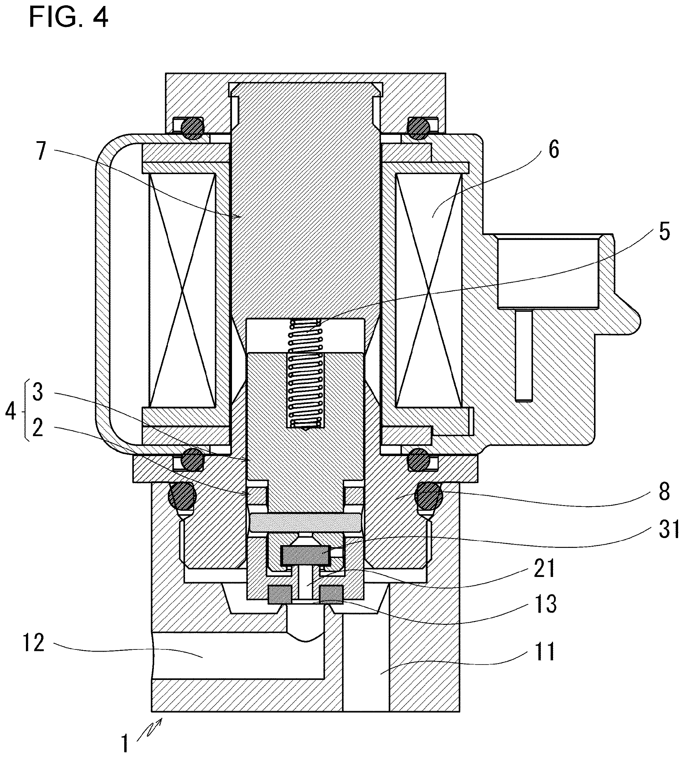

As illustrated in FIG. 4, the conventional pilot type solenoid valve presented in the above publications is a normally closed solenoid valve including a magnetic body movable core 4 including: a main valve 2 that opens or closes a valve seat 13 formed between an input port 11 and an output port 12 of a fuel transport path formed in a valve main body 1; and a pilot valve 3 connected to a base end side of the main valve 2 so as to be movable alone by a predetermined distance such that the movable core 4 is biased in a closing direction by a coil-shaped spring 5 and is slidable in a guide sleeve 8 of a fixed core 7 wound with an electromagnetic coil 6, in which the main valve 2 is normally pressed against the valve seat 13 by the compression coil spring 5 bridged between the fixed core 7 and the movable core 4, and the valve body 31 of the pilot valve 3 is pressed against a pilot valve hole 21 passing through the main valve 2 in a longitudinal direction thereof to disconnect the input port 11 and the output port 12 of the fuel transport path from each other.

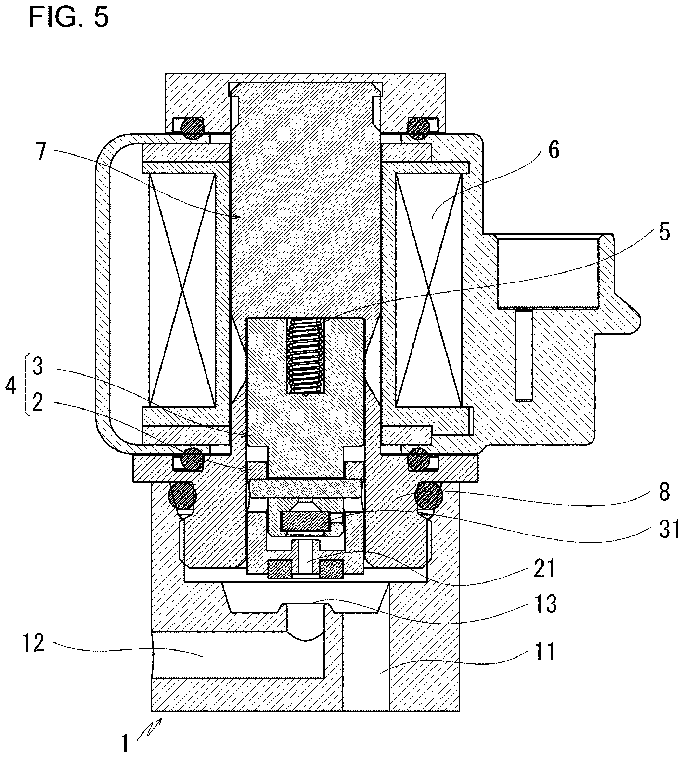

At the time of release, as illustrated in FIG. 5, a magnetic circuit is formed on the fixed core 7 by energizing the electromagnetic coil 6 to electromagnetically convert the fixed core 7, and a high pressure fluid can be easily released by a two-step operation in which the pilot valve 3 of the movable core 4 is first sucked in a state where the main valve 2 is closed to open the pilot valve hole 21 formed in the main valve 2, and the main valve 2 is opened when an electromagnetic force of the electromagnetic coil exceeds a pressure difference between the input port 11 and the output port 12 formed in the fuel transport path.

By the way, in the conventional pilot type solenoid valve, when the conventional pilot type solenoid valve is fully open, the pilot valve 3 is adsorbed by and fixed to the fixed core 7, but the main valve 2 connected to a tip of the pilot valve 3 is not fixed.

Therefore, for example, when the solenoid valve is disposed at a location where relatively large vibration is applied, such as in an engine, the main valve 2 vibrates and repeatedly collides with the guide sleeve 8, resulting in abnormal wear. Wear powder generated at this time causes a seal failure of the main valve 2. Finally, a connection portion between the main valve 2 and the pilot valve 3 is broken, making it difficult to open or close the main valve 2 disadvantageously.

### SUMMARY

An object of the present invention is to prevent damage of the main valve due to collision between the main valve and the guide sleeve caused by vibration when the high pressure pilot type solenoid valve is fully open.

A pilot type solenoid valve according to an embodiment of the present invention achieved in order to solve the above problem includes a movable core including: a main valve that opens or closes a valve seat formed between an input port and an output port of a fuel transport path in a valve main body; and a pilot valve connected to a base end side of the main valve so as to be axially movable alone by a predetermined distance such that the movable core is biased in a closing direction by a spring and is slidable in a guide sleeve of a fixed core wound with an electromagnetic coil. A magnetic circuit is formed on the electromagnetic coil by energizing the electromagnetic coil to electromagnetically convert the fixed core. The main valve is opened when an electromagnetic force of the electromagnetic coil exceeds a pressure difference between the input port and the output port formed in the fuel transport path by first sucking the pilot valve of the movable core and opening a pilot valve hole formed in the main valve. When the pilot type solenoid valve is fully open, by the electromagnetic force of the electromagnetic coil, a contact portion formed in the main valve is in contact with a contacted portion of the guide sleeve to restrict movement of the main valve toward a base end, and the pilot valve is sucked and held in a state where a base end of the pilot valve is not in contact with the fixed core.

According to the present invention, the contact portion formed in the main valve is tapered so as to expand toward a tip side, and the main valve is thereby aligned when being sucked by the fixed core to be inserted into the guide sleeve.

According to the present invention, when the pilot type solenoid valve is fully open, the pilot valve of the movable core is not bonded to the fixed core but fixed in a suctioned state with a gap between the pilot valve and the fixed core. The main valve connected to a tip of the pilot valve is in contact with the guide sleeve at a predetermined position thereof and is thereby held in a fixed state at all times by a suction force toward a base end by the electromagnetic fixed core. Therefore, even when vibration is transmitted to the main valve, the main valve does not collide with the guide sleeve and is not damaged.

### BRIEF DESCRIPTION OF DRAWINGS

FIG. 1 is a longitudinal cross-sectional view illustrating a pilot type solenoid valve when being fully closed according to a preferable embodiment of the present invention;
FIG. 2 is a longitudinal cross-sectional view illustrating the pilot type solenoid valve when being fully open according to the preferable embodiment of the present invention;
FIG. 3 is an enlarged partial view illustrating a main part of FIG. 2;
FIG. 4 is a longitudinal cross-sectional view illustrating a pilot type solenoid valve when being fully closed in a conventional example; and
FIG. 5 is a longitudinal cross-sectional view illustrating the pilot type solenoid valve when being fully open in the conventional example.

### DETAILED DESCRIPTION

Hereinafter, a preferable embodiment of the present invention will be described in detail with reference to the drawings.

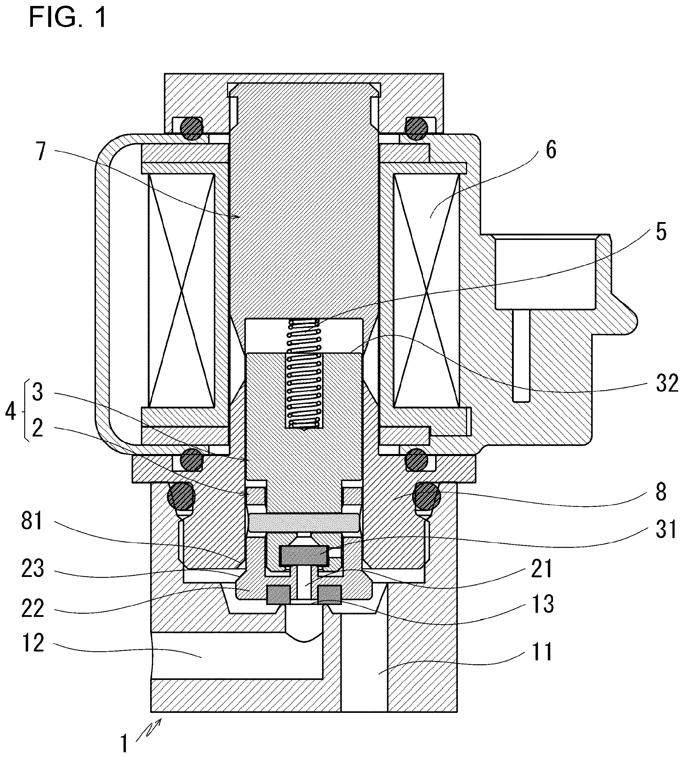

FIGS. 1 to 3 illustrate a preferable embodiment of the present invention, which is basically almost similar to the conventional example illustrated in FIGS. 4 and 5, and the entire description and operation will not be described in detail. The same components as those in the conventional example will be described with the same reference numerals.

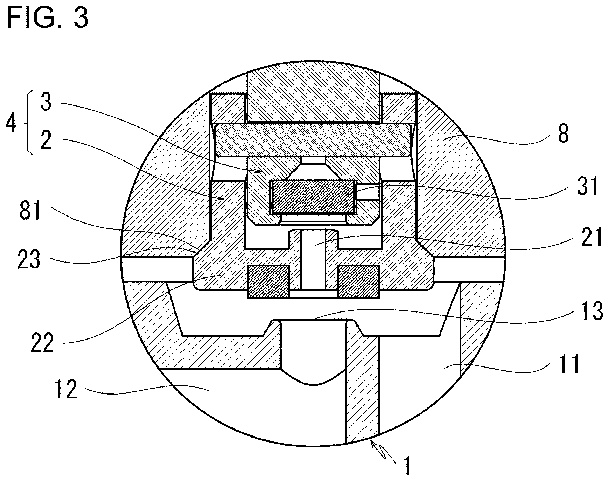

As described above, the present embodiment is almost similar to the conventional example illustrated in FIGS. 4 and 5 as a whole, but is different therefrom in that a main valve 2 to be inserted into a guide sleeve 8 is formed via a tapered contact portion 23 in which a bulging portion 22 having a larger diameter than a contacted portion 81 that is a tip edge of the guide sleeve 8 to be inserted into an outer periphery at a predetermined axial position expands toward a tip side (in particular, refer to FIG. 3).

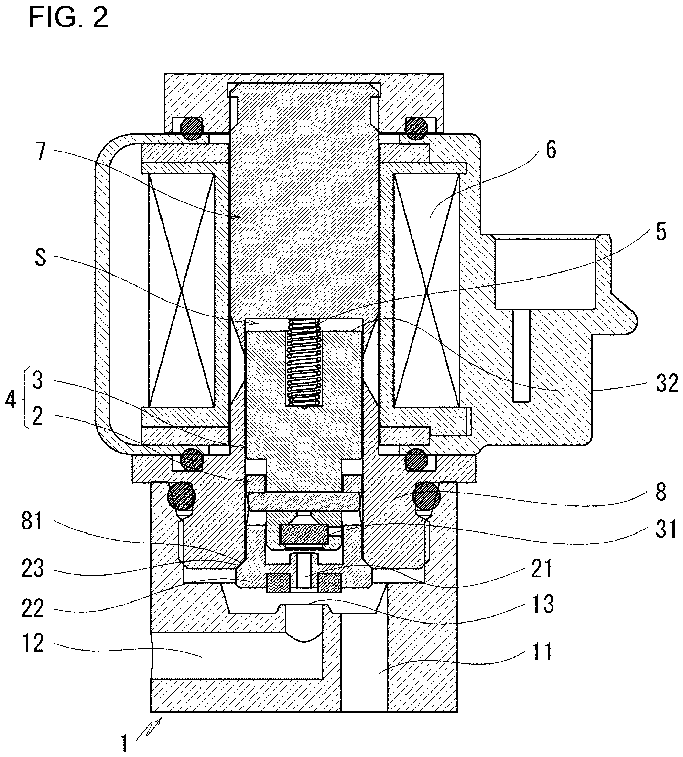

As illustrated in FIG. 2, when the pilot type solenoid valve is fully open, by the electromagnetic force of the electromagnetic coil 6, the contact portion 23 of the main valve 2 is in contact with the contacted portion 81 of the guide sleeve 8, and the pilot valve 3 is sucked and held in a state where a base end 32 of the pilot valve 3 is not in contact with the fixed core 7 (a state having a gap S) .

Therefore, in the present embodiment, when the main valve 2 moves from the time when the pilot type solenoid valve is fully closed to the time when the pilot type solenoid valve is fully open, in the conventional example illustrated in FIGS. 4 and 5, the main valve 2 is simply connected to the pilot valve 3 bonded to the fixed core 7 and is not fixed to the guide sleeve 8. Therefore, the main valve 2 collides with the guide sleeve 8 by vibration. However, in the present embodiment, the main valve 2 is held and fixed in a state where the contact portion 23 is in contact with the contacted portion 81 of the guide sleeve 8 and the contact portion 23 is pressed against the guide sleeve 8 toward a base end by a suction force of the pilot valve 3 having the gap S in the fixed core 7 and not adsorbing the base end 32. Therefore, even when there is vibration, the main valve 2 does not collide with the guide sleeve 8, and wear, damage, and the like by vibration can be prevented.

Furthermore, in the present embodiment, the contact portion 23 of the main valve 2 is tapered so as to expand toward a tip, and can prevent valve opening failure due to axial deviation by self-alignment at the beginning of insertion into the guide sleeve 8 at the beginning of opening.

## Claims

1. A pilot type solenoid valve comprising a movable core including: a main valve that opens or closes a valve seat formed between an input port and an output port of a fuel transport path in a valve main body; and a pilot valve connected to a base end side of the main valve so as to be axially movable alone by a predetermined distance such that the movable core is biased in a closing direction by a spring and is slidable in a guide sleeve of a fixed core wound with an electromagnetic coil, a magnetic circuit being formed on the electromagnetic coil by energizing the electromagnetic coil to electromagnetically convert the fixed core, the main valve being opened when an electromagnetic force of the electromagnetic coil exceeds a pressure difference between the input port and the output port formed in the fuel transport path by first sucking the pilot valve of the movable core and opening a pilot valve hole formed in the main valve, wherein
when the pilot type solenoid valve is fully open, by the electromagnetic force of the electromagnetic coil, a contact portion formed in the main valve is in contact with a contacted portion of the guide sleeve to restrict movement of the main valve toward a base end, and the pilot valve is sucked and held in a state where a base end of the pilot valve is not in contact with the fixed core.

2. The pilot type solenoid valve according to claim 1, wherein the contact portion formed in the main valve is tapered so as to expand toward a tip.
